# EUROPEAN PATENT SPECIFICATION

(11) **EP 3 734 909 B1**
(45) Date of publication and mention of the grant of the patent: **26.04.2023**
(21) Application number: 19172491.3
(22) Date of filing: 03.05.2019
(51) Int. Cl.: H04L 41/0894, H04W 76/11, H04W 8/26

(54) **MOBILE COMMUNICATION NETWORK ARRANGEMENT AND METHOD FOR OPERATING A MOBILE COMMUNICATION NETWORK ARRANGEMENT TO SUPPORT A NON-PUBLIC NETWORK**
MOBILKOMMUNIKATIONSNETZWERKANORDNUNG UND VERFAHREN ZUM BETRIEB EINER MOBILKOMMUNIKATIONSNETZWERKANORDNUNG ZUR UNTERSTÜTZUNG EINES NICHTÖFFENTLICHEN NETZWERKS
AGENCEMENT DE RÉSEAU DE COMMUNICATION MOBILE ET PROCÉDÉ DE FONCTIONNEMENT D'UN AGENCEMENT DE RÉSEAU DE COMMUNICATION MOBILE POUR SUPPORTER UN RÉSEAU NON PUBLIC

(43) Date of publication of application: 04.11.2020
(73) Proprietor: NTT DOCOMO, INC., Tokyo 100-6150 (JP)
(72) Inventor: THAKOLSRI, Srisakul, 80687 Munich (DE); SAMA, Malla Reddy, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- "3rd Generation Partnership Project; Technical Specification Group Services and System Aspects; Study on enhancement of 5GS for Vertical and LAN services (Release 16)", 3GPP DRAFT; 23734-G10_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2 25 March 2019 (2019-03-25), XP051751813, Retrieved from the Internet: URL:http://www.3gpp.org/ftp/tsg%5Fsa/WG2%5 FArch/Latest%5FSA2%5FSpecs/DRAFT%5FINTERIM /Archive/23734%2Dg10%5FCRs%5FImplemented%2 Ezip [retrieved on 2019-03-25]
- SAMSUNG: "New solution for CAG access control in Non-standalone NPNs", 3GPP DRAFT; S3-190995, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Kista, Stockholm (Sweden); 20190311 - 20190315 18 March 2019 (2019-03-18), XP051697918, Retrieved from the Internet: URL:http://www.3gpp.org/ftp/tsg%5Fsa/WG3%5 FSecurity/TSGS3%5F94AH%5FKista/Docs/S3%2D1 90995%2Ezip [retrieved on 2019-03-18]

## Description

### Description

### Mobile communication network arrangement and method for operating a mobile communication network arrangement to support a non-public network

The present disclosure relates to mobile communication network arrangements and methods for operating a mobile communication network arrangement to support a non-public network.

It is planned that for 5G (Fifth Generation) mobile communication, non-public networks may be deployed. A 5G non-public network (NPN) is a 5GS (5G communication system) deployed for non-public use (e.g. deployed by an enterprise for its members of the enterprise). An NPN may be deployed as standalone NPN (SNPN) which means that the NPN is not relying on network functions provided by a PLMN (Public Land Mobile Network) or as a public network integrated NPN, which means that the NPN is deployed with the support of a PLMN.

Current 3GPP (Third Generation Partnership Project) specifications elaborate on how to support an NPN on an architecture level. For example, it is specified that an NPN identifier is needed for mobile terminals (UEs), the radio access network (RAN) and the 5G core network (5GC) for UE configuration and subscription aspects, for network and/or cell selection and for network access control.

"3rd Generation Partnership Project; Technical Specification Group Services and System Aspects; Study on enhancement of 5G System (5GS) for vertical and Local Area Network (LAN) services (Release 16)", 3GPP Draft; 23734-G10_CRS_IMPLEMENTED, 3^{rd} Generation partnership project (3GPP) Mobile Competence Centre; 650 Routes des Lucioles; F-06921 Sophia-Antipolis Cedex France; Vol. SA WG2 discloses a process, and a related apparatus, for the identification of Non-Public Networks (NPN), advertisement of the NPNs, and registration of UEs with an NPN.

SAMSUNG "New Solution for CAG access control in Non-standalone NPNs", 3GPP DRAFI; S3-190995, 3RD GENERATION PARTNERSHIP PROJECT (3GPP), MOBILE COMPETENCE CENTRE: 630, ROUTE DES LUCIOLES; ; F-06921 SOPHIA-ANTIPOLIS CEDEX; FRANCE, vol. SA RG3. no. Kista, Stockholm (Sweden); 20190311 - 20190315 18 March 2019 (2019-03-18) discloses security solutions for the mitigation of denial of service (DoS) attacks in non-standalone NPNs during the registration procedure of UEs to the NPNs.

Still, mechanisms to support an operation of a communication network arrangement as a non-public network are desirable.

In a first aspect of the present invention a mobile communication network arrangement according to claim 1 is provided. Additional features for advantageous embodiments of the present invention are provided in the dependent claims. In a second aspect of the present invention a method for operating a mobile communication network arrangement according to claim 12 is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figures 2A and 2B: illustrate deployment options for the deployment of NPNs (Non-Public Networks) as SNPNs (Standalone NPNs).
- Figure 3: illustrates the deployment of an NPN as Public network integrated NPN.
- Figure 4: shows a table illustrating enhancements of NR (New Radio) Cell NRM (Network Resource Model).
- Figure 5: shows a table illustrating enhancements of SMF (Session Management Function) NRM.
- Figure 6: shows a table illustrating enhancements of UPF (User Plane Function) NRM.
- Figure 7: shows a flow diagram illustrating an example of an NR Cell MOI (Managed Object Instance) creation for an NR cell (e.g. on a base station) by an OAM function by using RESTFul HTTP based solution set of provisioning.
- Figure 8: shows a flow diagram illustrating an example of an NR Cell attribute modification for an NR cell by an OAM (Operation, Administration and Maintenance) function by using RESTFul HTTP (Hypertext Transfer Protocol) based solution set of provisioning.
- Figure 9: shows a table illustrating enhancements of a Network Function profile.
- Figure 10: shows a flow diagram illustrating a registration of a network function (NF) with an NRF (Network Repository Function) by the network function by using the RESTFul HTTP based protocol messages.
- Figure 11: shows a flow diagram illustrating a registration of a network function (NF) with an NRF or an SCP (Service Communication Proxy) by an CAM function by using the RESTFul HTTP based protocol messages.
- Figure 12: shows a flow diagram illustrating a NF discovery performed by a network function by means of an NRF or an SCP (Service Communication Proxy) by using the RESTFul HTTP based protocol messages.
- Figure 13: shows a communication arrangement including a hybrid cell for a Public network integrated NPN.
- Figure 14: illustrates another example of an NPN deployment as public network integrated NPN by using a multi-CAG cell based deployment.
- Figure 15: shows a mobile communication network arrangement according to an embodiment.
- Figure 16: shows a flow diagram illustrating a method for operating a mobile communication network arrangement to support a non-public network.

The following detailed description refers to the accompanying drawings that show, by way of illustration, specific details and aspects of this disclosure in which the invention may be practiced.

In the following, various examples will be described in more detail.

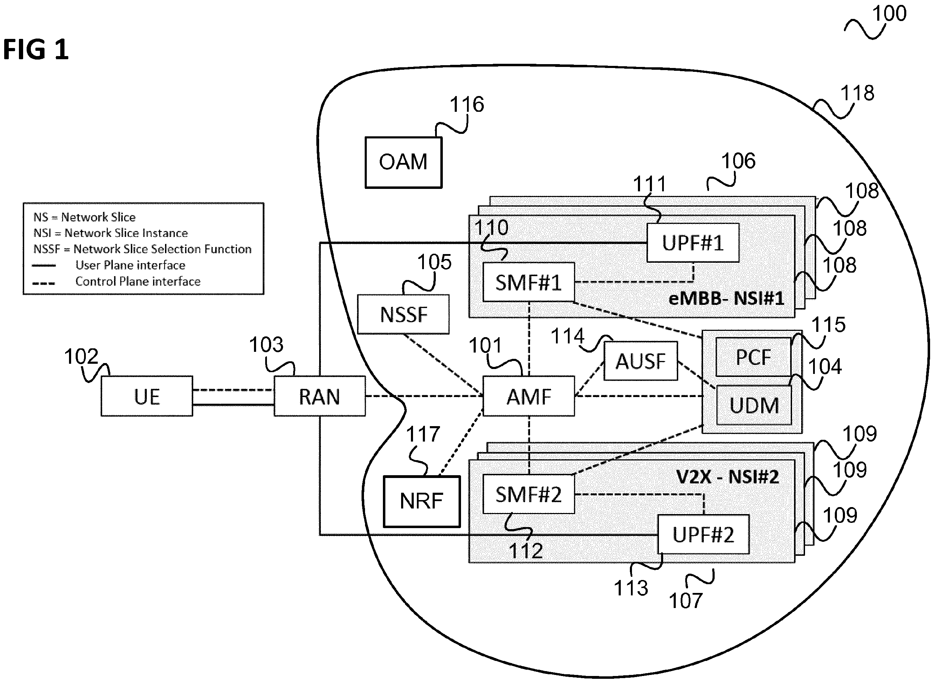

Figure 1 shows a radio communication system 100.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN). Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further comprises an AUSF (Authentication Server Function) 114 and a PCF (Policy Control Function) 115.

The core network 118 may have multiple network slices 106, 107 and for each network slice 106, 107, the operator may create multiple network slice instances (NSIs) 108, 109. For example, the core network 118 comprises a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 comprises a first Session Management Function (SMF) 110 and a first User Plane Function (UPF) 111 and each instance 109 of the second core network slice 107 comprises a second Session Management Function (SMF) 112 and a second User Plane Function (UPF) 113.

An S-NSSAI (Single Network Slice Selection Assistance information) identifies a network slice and is comprised of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration.

The core network 118 may further include an NRF (Network Repository Function) 117, which provides network function/network function service registration, network function/network function service discovery. The NRF may have an interface to any network functions in the mobile radio communication network side, e.g. have an interface to the AMF 101, the SMFs 110, 112. For simplicity, only the interface between the NRF 117 and the AMF 101 is depicted.

The radio communication system 100 includes an OAM (Operation, Administration and Maintenance) function (or entity) 116, e.g. implemented by one or more OAM servers which is connected to the RAN 103 and the core network 118 (connections are not shown for simplicity).

According to 3GPP (Third Generation Partnership Project), it is discussed to provide 5G non-public networks.

In contrast to a network that offers mobile network services to the general public, a 5G non-public network (NPN, also sometimes called a private network) provides 5G network services to a clearly defined user organisation or group of organisations. The 5G non-public network is deployed on the organisation's defined premises, such as a campus or a factory. Non-public networks can for example be desirable because of:
- High quality-of-service requirements;
- High security requirements, met by dedicated security credentials;
- Isolation from other networks, as a form of protection against malfunctions in the public mobile network. Also, isolation may be desirable for reasons of performance, security, privacy, and safety;
- Accountability. A non-public network makes it easier to identify responsibility for availability, maintenance, and operation.

A 5G NPN may be deployed as a Standalone Non-Public Network (SNPN) or as a Public network integrated NPN.

In a standalone non-public network (isolated deployment), the NPN is deployed as an independent, standalone network. All network functions are located inside the logical perimeter of the defined premises (e.g. factory) and the NPN is separate from the public network. The only communication path between the NPN and the public network is via a firewall. The firewall is a clearly defined and identifiable demarcation point. The operator of the NPN has sole and exclusive responsibility for operating the NPN and for all service attributes up to this point.

An SNPN is based on 3GPP-defined technologies and is entirely independent with its own dedicated SNPN ID. An optional connection to public network services via a firewall can be employed to enable access to public network services, such as voice, while within NPN coverage. Alternatively, NPN devices (UEs) can subscribe directly to the public network to access its services (dual subscription). If desired, the optional connection can be leveraged to access NPN services via the public network. Furthermore, the NPN operator can conclude roaming agreements with one or more public network operators, and the optional connection also be used for this purpose. Roaming agreements with public networks may entail technical constraints, depend on the specific use case.

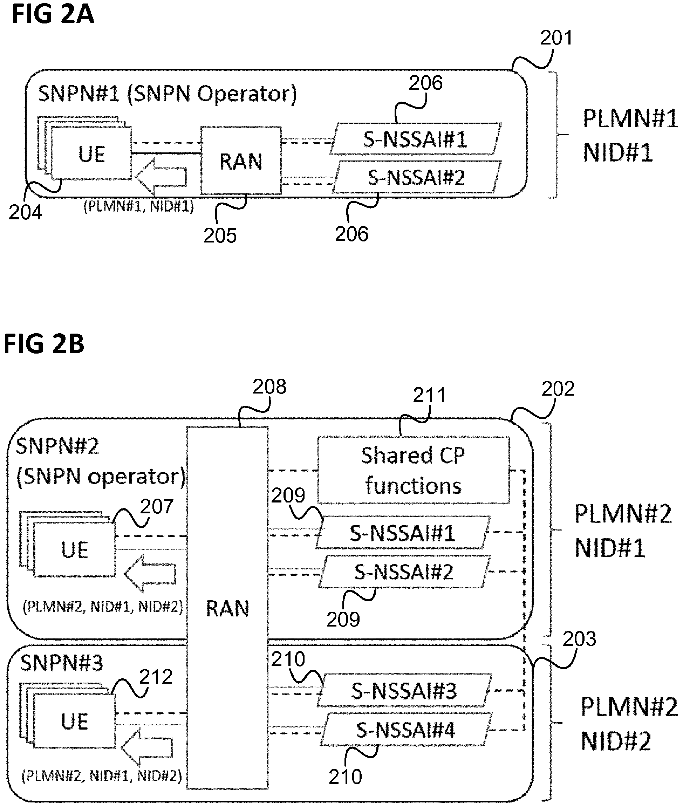

Figures 2A and 2B illustrate deployment options for the deployment of NPNs 201, 202, 203 as SNPNs.

In Figure 2A, multiple UEs 204 of the SNPN 201, i.e. subscriber terminals of the SNPN 201, are connected via a RAN 205 to multiple network slices 206 as explained with reference to figure 1.

In Figure 2B, there is a first SNPN 202 and a second SNPN 203. UEs 207 of the first SNPN 202 are connected via a RAN 208 to multiple first network slices 209 as explained with reference to figure 1 and UEs 212 of the second SNPN 203 are connected via the RAN 208 to multiple second network slices 210 as explained with reference to figure 1.

The SNPNs 202, 203 may share core network functions, e.g. control plane core network functions 211 (but also user plane core network functions).

Each SNPN 201, 202, 203 is identified by an SNPN ID. The SNPN ID is a combination of a PLMN ID and a Network ID (NID), which can be locally managed by the enterprise (for which the SNPN is provided) or universally managed by a central entity.

To enable network and cell selection, the RANs 205, 208 broadcast
- one or multiple PLMN IDs,
- NIDs per PLMN ID,
- human-readable network name per NID (optional),
- information to prevent UEs not supporting SNPN from accessing the SNPN cell (optional)

Regarding SNPN deployment options, as illustrated in Figure 2A, a RAN 205 may be exclusively used for a single NPN, or, as illustrated in Figure 2B, a RAN 208 may be managed by a single NPN operator, but shared among multiple enterprises (i.e. separate SNPNs 203, 204 for multiple enterprises).

A RAN may also be shared by multiple NPN operators and each NPN operator may provide services to one or more enterprises (not illustrated in figures 2A and 2B).

In a public network integrated NPN deployment a non-public network is deployed in conjunction with one or more public networks. This deployment is a combination of public and non-public networks. These scenarios assume that certain use cases on the defined premises can be supported entirely by the public network, whereas others require a dedicated NPN. There are therefore two network parts, one public and one non-public, with traffic assigned to the appropriate part.

The NPN and the public network may share part of a radio access network, while other network functions remain segregated. In that case, all data flows related to the NPN traffic portion are within the logical perimeter of the defined premises, e.g. factory, and the public network traffic portion is transferred to the public network. It should be noted that 3GPP specifications include functionality that enables RAN sharing. It is possible to configure additional base stations that are only accessible to NPN users.

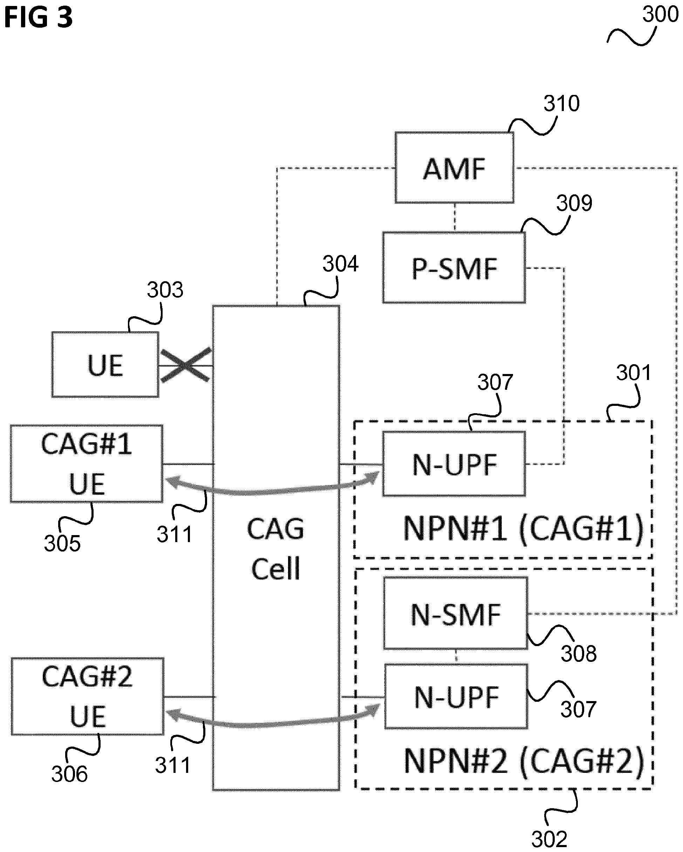

Figure 3 illustrates the deployment of an NPN as Public network integrated NPN 300.

As explained above, a public network integrated NPN is an NPN made available via PLMNs, e.g., by a dedicated DNN (Data Network Name) or Network Slice instances allocated to the NPN.

When an NPN is made available for a UE via a PLMN, the UE has a subscription for the PLMN.

In the example of figure 3, there are two NPNs, each one corresponding to a respective Closed Access Group (CAG) 301, 302. The CAGs 301, 302 are used to prevent a UE 303, which is not allowed to access the NPN via an associated radio cell 304, access to the RAN (of which the radio cell 304 is part) while allowing access to RAN via the radio cell 304 to UEs 305, 306 belonging to the closed access groups 301, 302.

In the example of figure 3, respective NPN UPFs (N-UPF) 307 are associated with the closed subscriber groups 301, 302 (and not used by a PLMN) and may for example provide PDU (Protocol Data Unit) sessions to the NPN UEs 305, 306 (as indicated by arrows 311). The second NPN corresponding to the second CAG 302 has an NPN SMF (N-SMF) 308 while the first NPN corresponding to the first CAG 301 uses the SMF 309 of a PLMN. Both NPNs use an AMF 310 of the PLMN.

A respective CAG ID identifies a group of subscribers (in this example UEs 305, 306), who are permitted to access one or more CAG cells 304 associated with the respective CAG 301, 302.

The CAG ID is unique within the scope of a PLMN ID. To enable network and/or cell selection, the RAN broadcasts the CAG ID per PLMN ID and optionally a human-readable network name per CAG ID.

Regarding deployment options, the RAN may be exclusively used for a single NPN (not depicted in figure 3) or the RAN may be managed by a PLMN but shared with multiple NPNs (as illustrated in figure 3)

According to various embodiments, to support an NPN for both a standalone NPN deployment and a public network integrated NPN deployment, e.g. according to figure 2 and 3, OAM function 116 is enhanced for NPN support.

Further, a radio cell may support multiple NPNs, e.g., a SNPN cell may support multiple NPNs (one NPN operator may support more than one NID), hence, a network function (NF) may be dedicated for a specific NPN. According to various embodiments, to allow a NF to discover an appropriate NF to communicate with, current NF or NF service registration/discovery is enhanced, e.g. to support such a multiple NPNs deployment scenario.

Specifically, according to various embodiments, approaches are described for configuring the RAN by the CAM with the information to be broadcast by the RAN (as described above with reference to figures 2A, 2B and 3). Further, Network Resource Model (NRM) enhancements for the RAN to support SNPN and PLMN integrated NPN are described.

Additionally, approaches are provided to allow a CN NF to discover and/or select a NF based on PLMN-ID and NID in case of a multiple NPNs deployment scenario (e.g., a network slice shared to multiple NPNs). Similarly, approaches are provided to allow a CN NF or a CN NF Service to discover and/or select a NF based on CAG-ID or a NF service based on CAG-ID in case of a multiple NPNs deployment scenario (e.g., a network slice is shared to multiple NPNs).

According to various embodiments, a mechanism for an OAM or an NF or NF service dedicated for a specific NPN to register with an NRF or SCP (Service Communication Proxy).

In the following, enhancements of Network Resource Model (NRM) according to various embodiments are described.

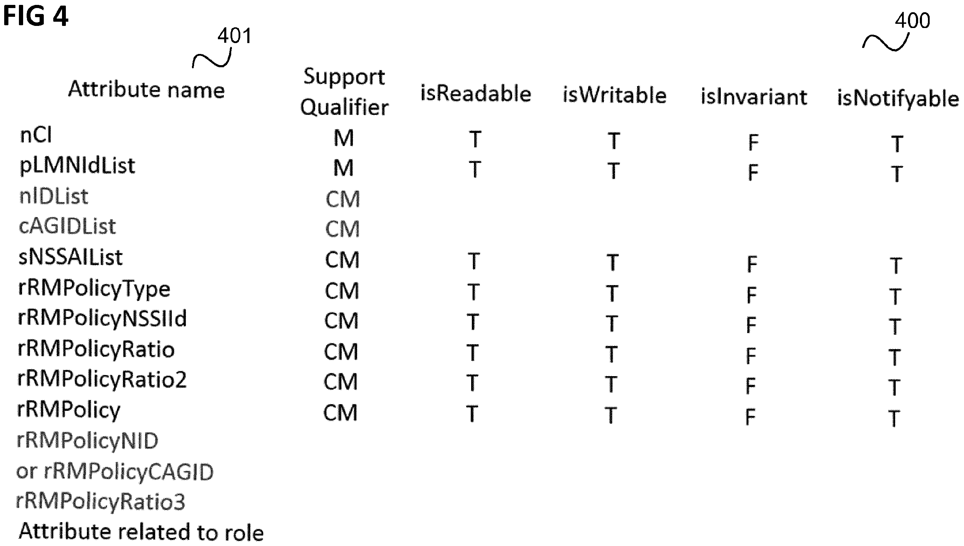

Figure 4 shows a table 400 illustrating enhancements of NR Cell NRM.

The NRCellCU IOC (Information Object Class) represents the information required by the CU (Central Unit) that is responsible for the management of inter-cell mobility and neighbour relations via ANR (Automatic Neighbor Relation).

The first column 401 of table 400 represents attributes of a new radio cell, e.g. of RAN 103. For example, the OAM function 116 may configure these attributes (i.e. set values for these attributes) for a radio cell, e.g. in a managing part of the base station operating the radio cell.

In the fourth line, the table 400 includes an attribute "nIDList" which may be introduced according to various embodiments to support an SNPN. It may be set to specify one or more NIDs of one or more NPNs that the radio cell is to support. In case, the cell supports more than one PLMN as configured in the third line of the NRCellCU attribute "pLMNIdList", each PLMN has its own NID list.

In the fifth line, the table 400 includes an attribute "cAGIDList" which may be introduced according to various embodiments to support a public integrated NPN. It may be set to specify one or more CAG-IDs of one or more NPNs that the radio cell is to support. In case, the cell supports more than one PLMN as configured in the third line of the NRCellCU attribute "pLMNIdList", each PLMN has its own CAG ID list.

It is to note that if the NR Cell supports the SNPN deployment, only the nIDList attribute exists, and not the cAGIdList. If the NR Cell supports the public integrated NPN, only the cAGIdList attribute exists, and not the nIDList.

In the thirteenth line, the table 400 includes an attribute "rRMPolicyRatio3" which may be introduced according to various embodiments. It may be set to indicate a ratio with which radio resources of the radio cell are to be distributed between multiple NPNs.

In the twelfth line, the table 400 includes an attribute "rRMPolicyNID" or an attribute "rRMPolicyCAGID" which may be introduced according to various embodiments. It may be set to specify the list of NIDs or CAG-IDs, respectively, for which the rRMPolicyRatio3 attribute value (or values) is to be applied (i.e. among which the radio resources are to be distributed according to the value).

Radio resources that may be shared are for example Physical Resource Blocks (PRBs) available at the radio cell (generally the RAN) which are resources in terms of frequency (e.g. carrier) and time.

Thus, the attribute "rRMPolicyRatio3" specifies the RRM policy setting the ratio for the split of the Radio resources between the supported NID/CAGID lists (of the attributes "rRMPolicyNID" or "rRMPolicyCAGID"). The value rRMPolicyRatio3 is for example the list of target percentage values assigned to the corresponding rRMPolicyNID values. Every value specifies the percentage of PRBs to be allocated to corresponding S-NSSAIs (for example of slices 209, 210 in figure 2) in average over time. The sum of the values shall be less or equal 100.

For example, the attributes "rRMPolicyRatio3" and "rRMPolicyNID" or "rRMPolicyCAGID" may specify that radio resources are to be distributed 30% to 70% among two NPNs. Table 1 shows another example of NR Cell NRM with Radio Resource Management Ratio Policy for different NPNs.

**Table 1**

| **Supported NID/CAG-ID** (rRMPolicyNID or rRMPolicyCAGID) | **RRM Policy Ratio for NID/CAG-ID** (rRMPolicy Ratio3) | **Supported S-NSSAI within NID/CAG** (rRMPolicy NSSIId) | **RRM Policy Ratio for S-NSSAI** (rRMPolicy Ratio) |
|---|---|---|---|
| PLMN#1+NID#1 or CAG#1 | 50% | S-NSSAI#1 | 50% |
| PLMN#1+NID#2 or CAG#2 | 30% | S-NSSAI#2 | 20% |
| | | S-NSSAI#3 | 10% |
| PLMN#1+NID#3 or CAG#3 | 20% | S-NSSAI#3 | 10% |
| | | S-NSSAI#4 | 10% |

It should be noted that the total allocated resources amount to 100% in each of columns 2 and 4.

It should further be noted that the seventh line of table 400 of figure 4 includes the attribute "rRMPolicyType" which specifies the type of the RRM policy. It may have the following values:
- The value 0 denotes use of the rRMPolicy.
- The value 1 denotes use of the rRMPolicyNSSIId, rRMPolicyRatio.
- The value 2 denotes use of the rRMPolicyRatio2.
- The value 3 is introduced according to various embodiments to denote use of the rRMPolicyNSSIId, rRMPolicyRatio, rRMPolicyNID/rRMPolicyCAGID, and rRMPolicyRatio3.

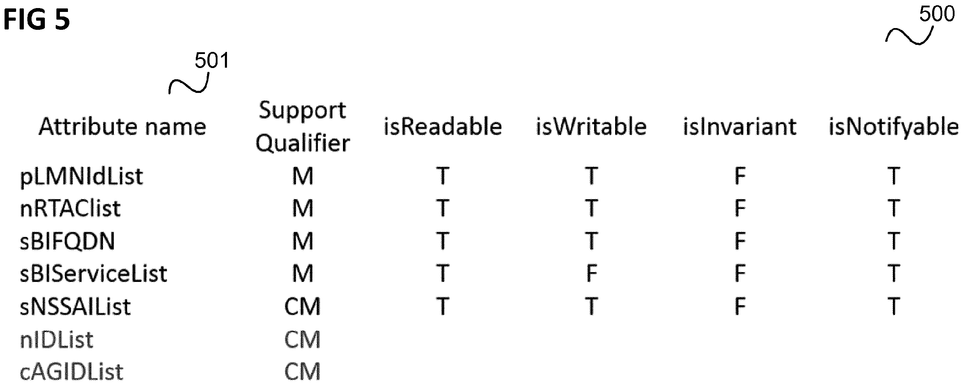

Figure 5 shows a table 500 illustrating enhancements of SMF NRM.

The SMFFunction IOC represents the SMF function in 5GC.

The first column 501 of table 500 represents attributes of an SMF, e.g. of SMF 110 or 112 of figure 1. For example, the OAM function 116 may configure these attributes (i.e. set values for these attributes) for an SMF, e.g. in a managing part of the SMF.

In the seventh line, the table 500 includes an attribute "nIDList" which may be introduced according to various embodiments to support an SNPN. It may be set to specify one or more NIDs of one or more NPNs that the SMF is to support.

In the eighth line, the table 500 includes an attribute "cAGIDList" which may be introduced according to various embodiments to support a public integrated NPN. It may be set to specify one or more CAG-IDs of one or more NPNs that the SMF is to support.

It is to note that if the NR Cell supports the SNPN deployment, only the nIDList attribute exists, and not the cAGIdList. If the NR Cell supports the public integrated NPN, only the cAGIdList attribute exists, and not the nIDList.

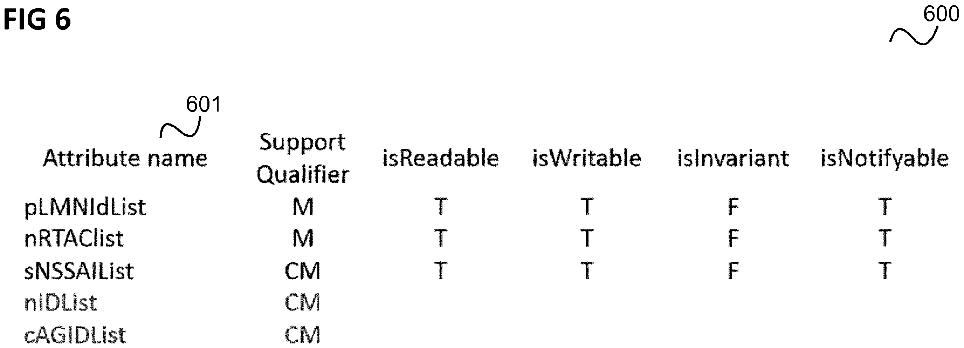

Figure 6 shows a table 600 illustrating enhancements of UPF NRM.

The UPFFunction IOC represents the UPF function in 5GC.

The first column 601 of table 600 represents attributes of an UPF, e.g. of UPF 111 or 113 of figure 1. For example, the CAM function 116 may configure these attributes (i.e. set values for these attributes) for an UPF, e.g. in a managing part of the UPF..

In the fifth line, the table 600 includes an attribute "nIDList" which may be introduced according to various embodiments to support an SNPN. It may be set to specify one or more NIDs of one or more NPNs that the UMF is to support.

In the sixth line, the table 600 includes an attribute "cAGIDList" which may be introduced according to various embodiments to support a public integrated NPN. It may be set to specify one or more CAG-IDs of one or more NPNs that the UMF is to support.

It is to note that if the NR Cell supports the SNPN deployment, only the nIDList attribute exists, and not the cAGIdList. If the NR Cell supports the public integrated NPN, only the cAGIdList attribute exists, and not the nIDList.

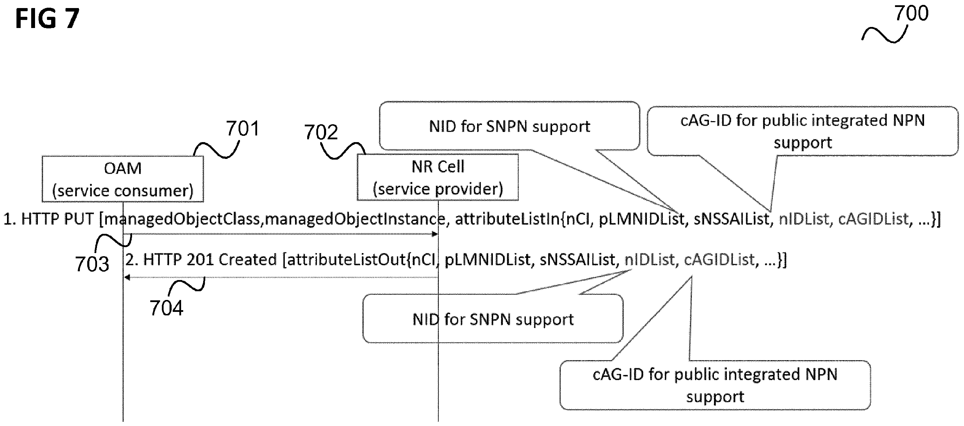

Figure 7 shows a flow diagram 700 illustrating an example of an NR Cell MOI (Managed Object Instance) creation for an NR cell (e.g. on a base station) by an OAM function by using RESTFul HTTP based solution set of provisioning.

An OAM function 701 (e.g. corresponding to OAM function 116) and an NR Cell 702 (e.g. corresponding to a base station of RAN 103) are involved in the flow.

In 703, the OAM 701 sends an HTTP PUT to the NR Cell 702. It includes the specification of a managed object class, a managed object instance and an attribute list which may include attributes as shown in table 400 of figure 4.

In 704, the NR Cell 702 acknowledges with an HTTP 201 Created message which may include a list of the attributes of the created managed object instance.

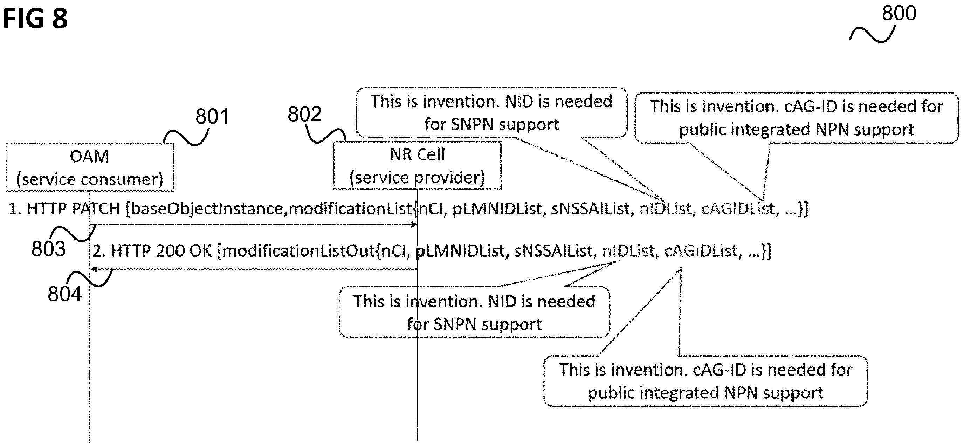

Figure 8 shows a flow diagram 700 illustrating an example of an NR Cell attribute modification for an NR cell (e.g. on a base station) by an CAM function by using RESTFul HTTP based solution set of provisioning.

An OAM function 801 (e.g. corresponding to OAM function 701) and an NR Cell 802 (e.g. corresponding to NR Cell 702) are involved in the flow.

In 803, the OAM 801 sends an HTTP PATCH to the NR Cell 802. It includes the specification of a base object instance and a list of modifications of values for attributes as shown in table 400 of figure 4 and for example of a managed object instance as created according to figure 7.

In 804, the NR Cell 802 acknowledges with an HTTP 200 OK message which may include a list of the modifications performed.

In the following, enhancements of NF discovery and NF selection for supporting SNPNs and public integrated NPNs according to various embodiments are described.

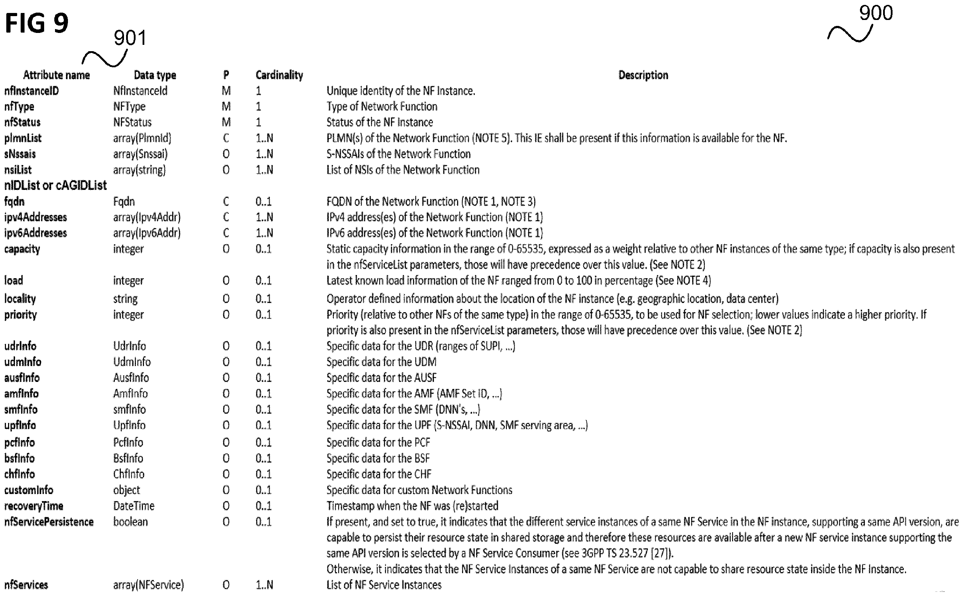

Figure 9 shows a table 900 illustrating enhancements of a profile.

The first column 901 of table 900 represents attributes of a network function, e.g. an SMF 110, 112 or a UPF 111, 113, as it may be stored in an NRF 117.

In the eighth line, the table 900 includes an attribute "nIDList" or an attribute "cAGIDList" which may be introduced according to various embodiments to support an SNPN or a public integrated NPN, respectively.

The attribute "nIDList" may specify one or more NIDs of one or more NPNs that the NF supports. The attribute "cAGIDList" may specify one or more CAG-IDs of one or more NPNs that the NF supports.

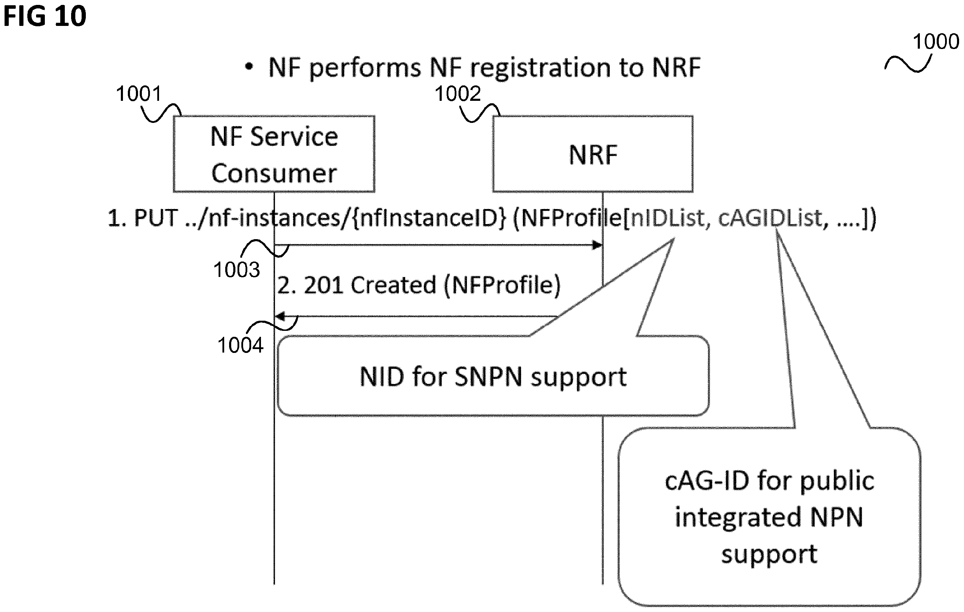

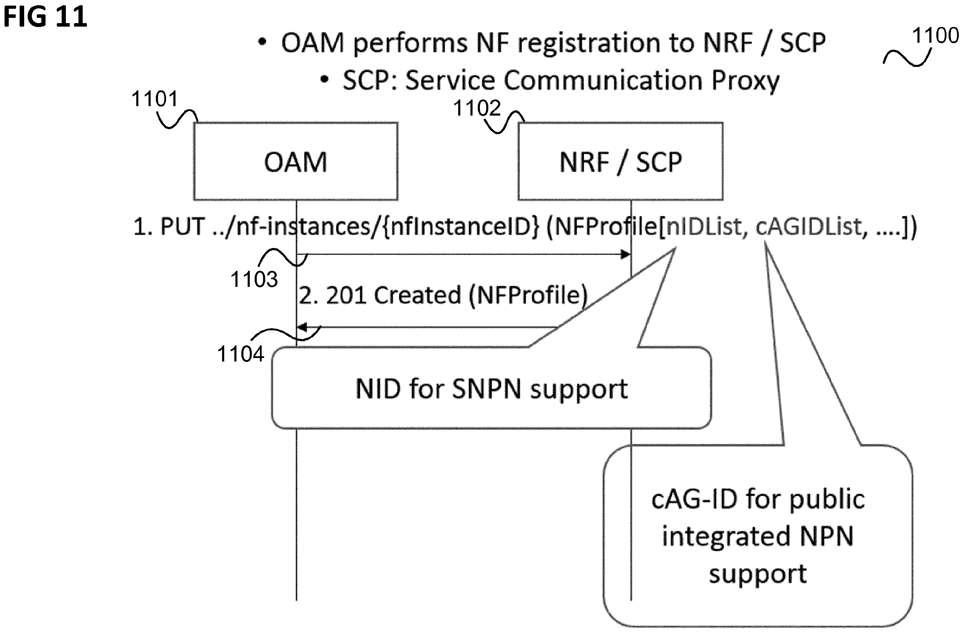

Enhancements of NF Registration for NPN support are described with reference to figures 10 and 11.

Figure 10 shows a flow diagram 1000 illustrating a registration of a network function (NF) with an NRF by the network function by using the RESTFul HTTP based protocol messages.

A network function 1001 and an NRF 1002 are involved in the flow.

In 1003, the network function 1001 sends a PUT message to the NRF 1002 including a specification of a NF profile including attributes as explained with reference to figure 9.

In 1004, the NRF 1002 acknowledges the registration by means of a 201 Created message indicating the registered NF profile.

Figure 11 shows a flow diagram 1100 illustrating a registration of a network function (NF) with an NRF or an SCP (Service

Communication Proxy) by an CAM function by using the RESTFul HTTP based protocol messages.

An CAM function 1101 and an NRF/SCP 1102 are involved in the flow.

In 1103, the CAM function 1101 sends a PUT message to the NRF/SCP 1102 including a specification of a NF profile including attributes as explained with reference to figure 9.

In 1104, the NRF/SCP 1102 acknowledges the registration by means of a 201 Created message indicating the registered NF profile.

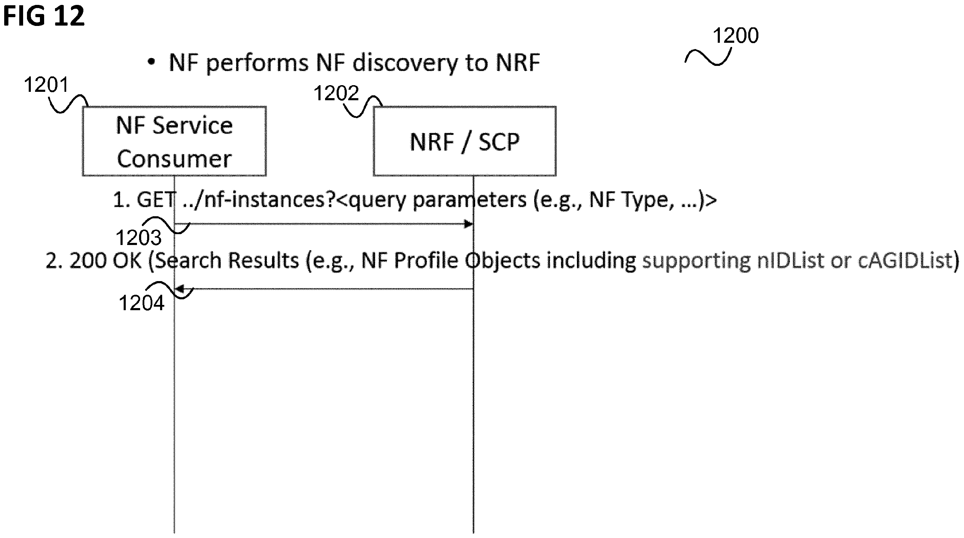

Figure 12 shows a flow diagram 1200 illustrating a NF discovery performed by a network function by means of an NRF or an SCP.

A network function 1201 and an NRF/SCP 1202 are involved in the flow. The network function 1201 intends to perform NF discovery, i.e. to find another network function.

In 1203, the network function 1201 sends a GET message to the NRF/SCP 1202 including query parameters specifying characteristics of the NF it intends to discover, e.g. an NF Type .

In 1204, the NRF/SCP 1202 provides search results to the NF 1201 by means of a 200 OK message, for example in the form of NF profiles found matching the query parameters. The NF profiles may include attributes as explained with reference to figure 9, in particular an nIDList or a cAGIDList.

According to various embodiments, NRM enhancements may also be provided for a hybrid cell, which provide an network access to an NPN and to a PLMN.

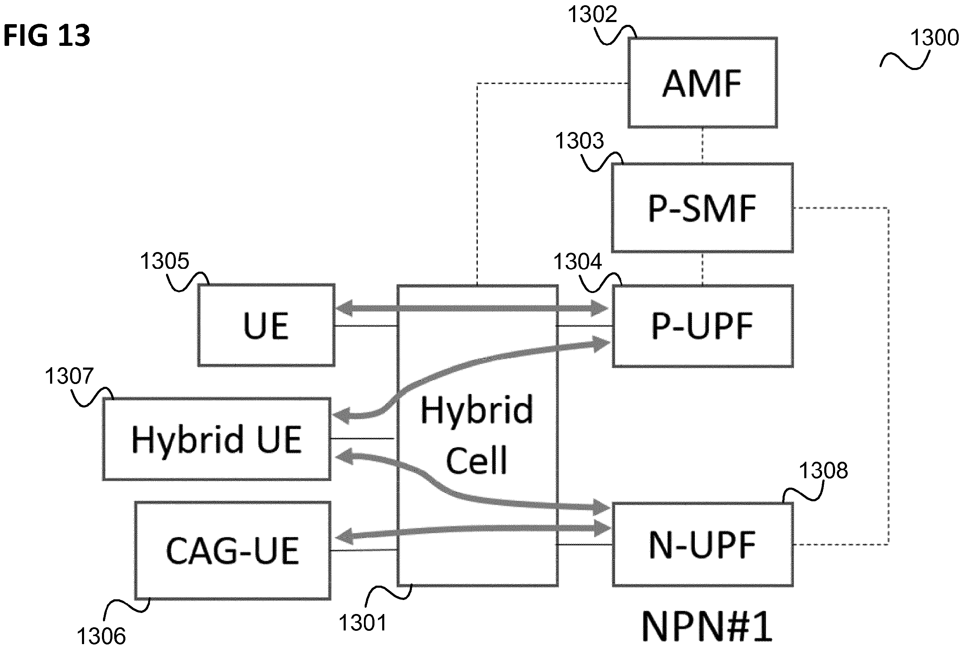

Figure 13 shows a communication arrangement including a hybrid cell 1301 for a Public network integrated NPN.

The communication arrangement supports a PLMN including an AMF 1302, a P-SMF 1303 and a P-UPF 1304 (the "P" indicates public) and an NPN including an N-UPF 1308 and making use the PLMN components 1302, 1303 and 1304.

Via the hybrid cell 1301, a subscriber terminal 1305 of the PLMN may access the PLMN, e.g. the P-UPF 1304, and a subscriber terminal 1306 of the NPN may access the NPN, e.g. N-UPF 1305.

A hybrid UE, i.e. a subscriber terminal of both the PLMN and the NPN may access both the PLMN and the NPN (e.g. P-UPF 1304 and N-UPF 1305) via the hybrid cell 1301.

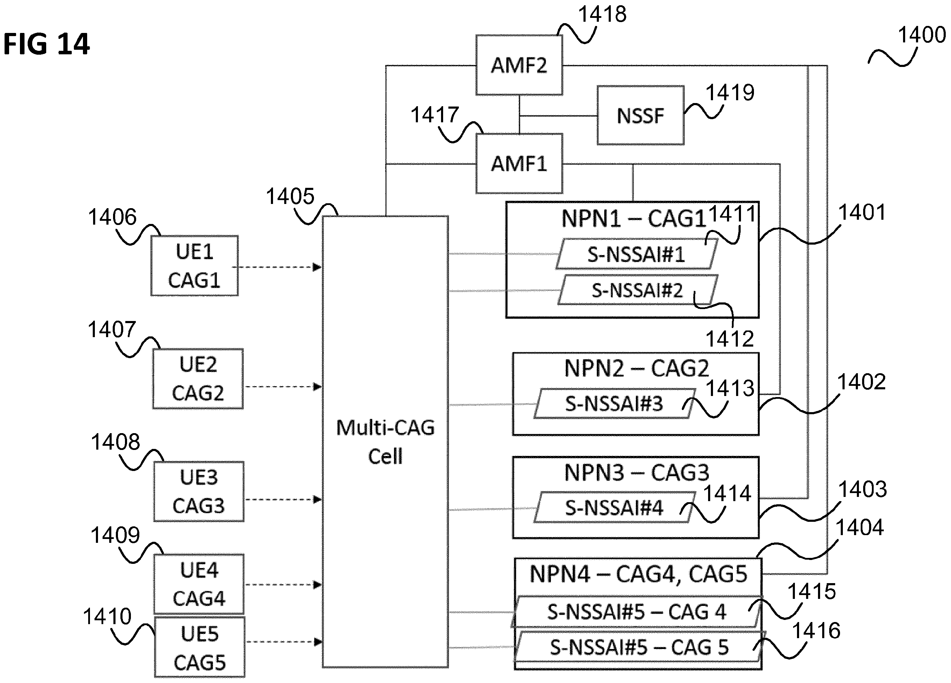

Another example to which NRM enhancements and NF profile enhancements may be applied is an public network integrated NPN deployed based on a multi-CAG cell as depicted in figure 14.

Figure 14 illustrates the multi-CAG cell based deployment of an NPN.

In the example of figure 14, there are four NPNs 1401 to 1404, each one corresponding to one or more respective Closed Access Groups (CAGs). A multi-CAG cell 1405 allows access UEs 1406 to 1410 belonging to the closed access groups access to a RAN and respective network slices 1411 to 1416.

Similarly to the example of figure 3, the NPNs 1401 to 1404 may have their own network functions or use a PLMN's network functions such as AMFs 1417, 1418 and an NSSF 1419.

It should be noted that the fourth NPN 1404 comprises two network slices 1415, 1416 which may for example each serve a respective group of users (UEs).

A use case of having multiple groups of users within the same NPN (e.g. enterprise), which are served by their respective network slice, is to provide different classes of end-users of the enterprise, for example, default users vs. premium users, experienced users vs. normal users, heavy-used users vs. light-used users or engineers vs management people of the enterprise.

In such a case with an NPN having multiple network slices, an additional parameter like CAG-ID (or an additionally introduced parameter) may be used for SMF/UPF selection by the AMF.

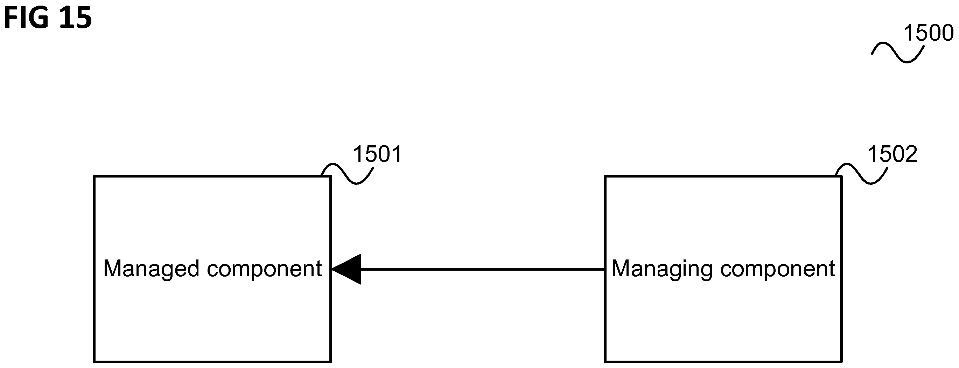

In summary, according to various embodiments, a mobile communication network arrangement is provided as illustrated in figure 15.

Figure 15 shows a mobile communication network arrangement according to an embodiment.

The mobile communication network arrangement 1500 comprises a first communication network component 1501 configured to provide a communication network functionality.

Further, the mobile communication network arrangement comprises a second communication network component configured to administrate and manage an attribute of the first communication network component, wherein the attribute specifies one or more non-public communication networks or one or more non-public communication network subscriber groups for which the first communication network component is to provide the communication network functionality.

According to various embodiments, in other words, a communication network component, e.g. a RAN component or a CN component, is configured to support one or more NPNs by providing a respective RAN or CN functionality, e.g. RAN access, (e.g. PDU) session management and/or provision etc. For a Public network integrated NPN this for example means that the communication network component is configured to support one or more non-public communication network subscriber groups.

The second communication network component may for example create or modify an NF (including a RAN component) to support one or more Non-Public Networks. Further, it may before NF registration, NF update and NF discovery to support the one or more Non-Public Networks.

For example, an CAM function may create and modify NPN related attributes of a RAN component and an NF to support one or more NPNs. An NF (or RAN component) may be shared to support multiple NPNs.

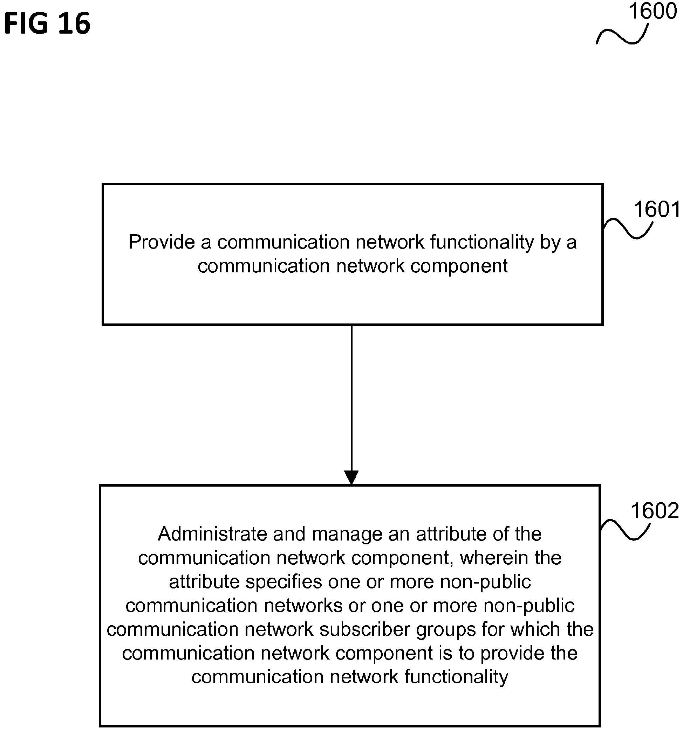

The mobile communication network arrangement for example carries out a method as illustrated in figure 16.

Figure 16 shows a flow diagram 1600 illustrating a method for operating a mobile communication network arrangement to support a non-public network.

In 1601 a communication network functionality is provided by a communication network component.

In 1602, an attribute of the communication network component is administrated and managed, wherein the attribute specifies one or more non-public communication networks or one or more non-public communication network subscriber groups for which the communication network component is to provide the communication network functionality.

It should be noted that 1601 and 1602 are not necessarily performed in the order as shown but may be also performed in the reverse order, in parallel or repeatedly in an alternating or simultaneous manner.

According to a further example, a method for a communication network to perform a network operation and network management for a non-public network is provided, wherein the method comprises
- a Radio Access Network (RAN) and a Core Network (CN) providing a non-public network service, wherein the CN includes one or more network entities;
- a UE requesting an access to non-public network; and
- an operational and administrating management (OAM) for managing and administrating the RAN and the CN for the non-public network service including managing and administrating
   o the RAN and the network entities of the CN, and
   o a Network Resource Model (NRM) that comprises a list of supported NPN (e.g., NID list or CAG ID list) to allow the OAM to create, delete and modify the attributes for the RAN and for the network entities of the CN supporting the NPN.

The method may further comprise performing a network function/network function service registration and discovery by taking into account non-public network identifiers (e.g., NID, CAG ID) of supported NPNs.

The components of the mobile communication network arrangement (in particular the first communication network component and the second communication network component) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A mobile communication network arrangement (100) comprising:
a first communication network component (101, 103, 110, 111, 112, 113) configured to provide a communication network functionality; and
a second communication network component (116) configured to administrate and manage an attribute of the first communication network component (101, 103, 110, 111, 112, 113), wherein the attribute specifies one or more non-public communication networks (301, 302) or one or more non-public communication network subscriber groups for which the first communication network component (101, 103, 110, 111, 112, 113) is to provide the communication network functionality;
wherein the second communication network component is an Operation, Administration and Maintenance component, OAM, (116) of the mobile communication network arrangement;
wherein the first communication network component (101, 103, 110, 111, 112, 113) is a network component in a mobile core network (118) or a radio access network (103) component;
wherein to administrate and manage the attribute of the first communication network component (101, 103, 110, 111, 112, 113) includes creating, deleting and modifying the attribute; and
wherein the attribute is part of a network function profile and/or a network resource model of the first communication network component (101, 103, 110, 111, 112, 113).

2. Mobile communication network arrangement according to claim 1, wherein the second communication network component (116) is configured to perform a managing operation of the attribute.

3. Mobile communication network arrangement according to claim 2, wherein the managing operation is the creation of the attribute on the first communication network component (101, 103, 110, 111, 112, 113), the deletion of the attribute on the first communication network component (101, 103, 110, 111, 112, 113) or a modification of the attribute information.

4. Mobile communication network arrangement according to claim 3, wherein creation of the attribute includes a specification of the one or more non-public communication networks (301, 302) or one or more non-public communication network subscriber groups.

5. Mobile communication network arrangement according to claim 2, wherein the managing operation is a registration of the attribute information in a network function database.

6. Mobile communication network arrangement according to claim 5, wherein the network function database is a network repository function, a service communication proxy or a network function discovery function.

7. Mobile communication network arrangement according to any one of claims 1 to 6, wherein the first communication network component is configured to provide the communication network functionality for subscribers of the one or more non-public communication networks or of the one or more non-public communication network subscriber groups.

8. Mobile communication network arrangement according to claim 1, wherein the network component in a mobile core network (118) is an Access and Mobility Management Function (AMF), a Session Management Function (SMF) or a User-Plane network Function (UPF).

9. Mobile communication network arrangement according to any one of claims 1 to 8, wherein the radio access network (103) component is a base station.

10. Mobile communication network arrangement according to claim 1, wherein when the first communication network component (101, 103, 110, 111, 112, 113) is a radio access network (103) component, the radio access network (103) component is configured to distribute radio resources among a plurality of non-public communication networks (301, 302) and/or a plurality of non-public communication network subscriber groups in accordance with a radio resource management policy.

11. Mobile communication network arrangement according to claim 10, wherein the radio resource management policy is available as local configuration at the radio access network (103) component or the second communication network component (116) is configured to configure the radio resource management policy of the radio access network (103) component.

12. A method for operating a mobile communication network arrangement (100) to support a non-public network comprising:
Providing a communication network functionality by a communication network component (101, 103, 110, 111, 112, 113); and
Administrating and managing an attribute of the communication network component (101, 103, 110, 111, 112, 113), wherein the attribute specifies one or more non-public communication networks (301, 302) or one or more non-public communication network subscriber groups for which the communication network component (101, 103, 110, 111, 112, 113) is to provide the communication network functionality;
wherein the administrating and managing is performed by an Operation, Administration and Maintenance component, OAM, (116) ;
wherein the communication network component (101, 103, 110, 111, 112, 113) is a network component in a mobile core network (118) or a radio access network (103) component;
wherein administrating and managing the attribute of the communication network component (101, 103, 110, 111, 112, 113) includes creating, deleting and modifying the attribute; and
wherein the attribute is part of a network function profile and/or a network resource model of the communication network component (101, 103, 110, 111, 112, 113).

## Patentansprüche

1. Eine Mobilkommunikationsnetzanordnung (100) aufweisend:
eine erste Kommunikationsnetzkomponente (101, 103, 110, 111, 112, 113), eingerichtet zum Bereitstellen einer Kommunikationsnetzfunktionalität; und
eine zweite Kommunikationsnetzkomponente (116), eingerichtet zum Administrieren und Verwalten eines Attributs der ersten Kommunikationsnetzkomponente (101, 103, 110, 111, 112, 113), wobei das Attribut ein oder mehrere nicht-öffentliche Kommunikationsnetze (301, 302) oder eine oder mehrere nicht-öffentliche Kommunikationsnetz-Teilnehmergruppen spezifiziert, für die die erste Kommunikationsnetzkomponente (101, 103, 110, 111, 112, 113) die Kommunikationsnetzfunktionalität bereitstellen soll;
wobei die zweite Kommunikationsnetzkomponente eine Betriebs-, Administrations- und Wartungskomponente, OAM, (116) der Mobilkommunikationsnetzanordnung ist;
wobei die erste Kommunikationsnetzkomponente (101, 103, 110, 111, 112, 113) eine Netzkomponente in einem Mobil-Kernnetz (118) oder eine Funkzugangsnetzkomponente (103) ist;
wobei das Administrieren und Verwalten des Attributs der ersten Kommunikationsnetzkomponente (101, 103, 110, 111, 112, 113) das Erzeugen, Löschen und Modifizieren des Attributs enthält; und
wobei das Attribut Teil eines Netzfunktionsprofils und/oder eines Netzressourcenmodells der ersten Kommunikationsnetzkomponente (101, 103, 110, 111, 112, 113) ist.

2. Mobilkommunikationsnetzanordnung gemäß Anspruch 1, wobei die zweite Kommunikationsnetzkomponente (116) eingerichtet ist, um eine Verwaltungsoperation des Attributs durchzuführen.

3. Mobilkommunikationsnetzanordnung gemäß Anspruch 2, wobei die Verwaltungsoperation die Erzeugung des Attributs auf der ersten Kommunikationsnetzkomponente (101, 103, 110, 111, 112, 113), die Löschung des Attributs auf der ersten Kommunikationsnetzkomponente (101, 103, 110, 111, 112, 113) oder eine Änderung der Attributinformation ist.

4. Mobilkommunikationsnetzanordnung gemäß Anspruch 3, wobei die Erzeugung des Attributs eine Beschreibung des einen oder der mehreren nicht-öffentlichen Kommunikationsnetze (301, 302) oder einer oder mehrerer nicht-öffentlicher Kommunikationsnetzteilnehmergruppen enthält .

5. Mobilkommunikationsnetzanordnung gemäß Anspruch 2, wobei der Verwaltungsvorgang eine Registrierung der Attributinformationen in einer Netzfunktionsdatenbank ist.

6. Mobilkommunikationsnetzanordnung gemäß Anspruch 5, wobei die Netzfunktionsdatenbank eine Netzspeicherfunktion, ein Dienstkommunikationsproxy oder eine Netzfunktionsermittlungsfunktion ist.

7. Mobilkommunikationsnetzanordnung gemäß irgendeinem der
Ansprüche 1 bis 6, wobei die erste Kommunikationsnetzkomponente eingerichtet ist, um die Kommunikationsnetzfunktionalität für Teilnehmer des einen oder der mehreren nicht-öffentlichen Kommunikationsnetze oder der einen oder der mehreren nicht-öffentlichen Kommunikationsnetzteilnehmergruppen bereitzustellen.

8. Mobilkommunikationsnetzanordnung gemäß Anspruch 1, wobei die Netzkomponente in einem Mobil-Kernnetz (118) eine Zugangs- und Mobilitätsmanagementfunktion (AMF), eine Sitzungsmanagementfunktion (SMF) oder eine User-Plane-Netzfunktion (UPF) ist.

9. Mobilkommunikationsnetzanordnung gemäß irgendeinem der Ansprüche 1 bis 8, wobei die Komponente des Funkzugangsnetzes (103) eine Basisstation ist.

10. Mobilkommunikationsnetzanordnung gemäß Anspruch 1, wobei, wenn die erste Kommunikationsnetzkomponente (101, 103, 110, 111, 112, 113) eine Funkzugangsnetzkomponente (103) ist, die Funkzugangsnetzkomponente (103) eingerichtet ist , um
Funkressourcen unter einer Mehrzahl von nicht-öffentlichen Kommunikationsnetzen (301, 302) und/oder einer Mehrzahl von nicht-öffentlichen Kommunikationsnetzteilnehmergruppen gemäß einer Funkressourcenverwaltungsrichtlinie zu verteilen.

11. Mobilkommunikationsnetzanordnung gemäß Anspruch 10, wobei die Funkressourcenverwaltungsrichtlinie als lokale Konfiguration an der Funkzugangsnetzkomponente (103) verfügbar ist oder die zweite Kommunikationsnetzkomponente (116) eingerichtet ist, um die Funkressourcenverwaltungsrichtlinie der Funkzugangsnetzkomponente (103) zu konfigurieren.

12. Ein Verfahren zum Betreiben einer Mobilkommunikationsnetzanordnung (100) zur Unterstützung eines nicht-öffentlichen Netzes, aufweisend:
Bereitstellen einer Kommunikationsnetzfunktionalität durch eine Kommunikationsnetzkomponente (101, 103, 110, 111, 112, 113); und
Administrieren und Verwalten eines Attributs der Kommunikationsnetzkomponente (101, 103, 110, 111, 112, 113), wobei das Attribut ein oder mehrere nicht-öffentliche Kommunikationsnetze (301, 302) oder eine oder mehrere nicht-öffentliche Kommunikationsnetz-Teilnehmergruppen angibt, für die die Kommunikationsnetzkomponente (101, 103, 110, 111, 112, 113) die Kommunikationsnetzfunktionalität bereitstellen soll;
wobei die Administration und die Verwaltung von einer Betriebs-, Verwaltungs- und Wartungskomponente, OAM, (116) durchgeführt wird;
wobei die Kommunikationsnetzkomponente (101, 103, 110, 111, 112, 113) eine Netzkomponente in einem Mobil-Kernnetz (118) oder eine Funkzugangsnetzkomponente (103) ist;
wobei das Administrieren und Verwalten des Attributs der Kommunikationsnetzkomponente (101, 103, 110, 111, 112, 113) das Erzeugen, Löschen und Modifizieren des Attributs enthält; und
wobei das Attribut Teil eines Netzfunktionsprofils und/oder eines Netzressourcenmodells der Kommunikationsnetzkomponente (101, 103, 110, 111, 112, 113 ) ist.

## Revendications

1. Agencement de réseau de communication mobile (100) comprenant :
un premier composant de réseau de communication (101, 103, 110, 111, 112, 113) configuré pour fournir une fonctionnalité de réseau de communication ; et
un deuxième composant de réseau de communication (116) configuré pour administrer et gérer un attribut du premier composant de réseau de communication (101, 103, 110, 111, 112, 113), dans lequel l'attribut spécifie un ou plusieurs réseaux de communication non publics (301, 302) ou un ou plusieurs groupes d'abonnés de réseaux de communication non publics pour lesquels le premier composant de réseau de communication (101, 103, 110, 111, 112, 113) doit fournir la fonctionnalité de réseau de communication ;
dans lequel le second composant de réseau de communication est un composant d'opération, administration et maintenance, OAM, (116) de l'agencement de réseau de communication mobile ;
dans lequel le premier composant de réseau de communication (101, 103, 110, 111, 112, 113) est un composant de réseau dans un réseau central mobile (118) ou un composant de réseau d'accès radio (103) ;
dans lequel l'administration et la gestion de l'attribut du premier composant de réseau de communication (101, 103, 110, 111, 112, 113) comprend la création, la suppression et la modification de l'attribut ; et
dans lequel l'attribut fait partie d'un profil de fonction de réseau et/ou d'un modèle de ressource de réseau du premier composant de réseau de communication (101, 103, 110, 111, 112, 113).

2. Agencement de réseau de communication mobile selon la revendication 1, dans lequel le second composant de réseau de communication (116) est configuré pour effectuer une opération de gestion de l'attribut.

3. Agencement de réseau de communication mobile selon la revendication 2, dans lequel l'opération de gestion est la création de l'attribut sur le premier composant de réseau de communication (101, 103, 110, 111, 112, 113), la suppression de l'attribut sur le premier composant de réseau de communication (101, 103, 110, 111, 112, 113) ou une modification des informations d'attribut.

4. Agencement de réseau de communication mobile selon la revendication 3, dans lequel la création de l'attribut comprend une spécification du ou des réseaux de communication non publics (301, 302) ou du ou des groupes d'abonnés de réseaux de communication non publics.

5. Agencement de réseau de communication mobile selon la revendication 2, dans lequel l'opération de gestion est un enregistrement des informations d'attribut dans une base de données de fonctions de réseau.

6. Agencement de réseau de communication mobile selon la revendication 5, dans lequel la base de données de fonctions de réseau est une fonction de dépôt de réseau, un mandataire de communication de services ou une fonction de découverte de fonctions de réseau.

7. Agencement de réseau de communication mobile selon l'une quelconque des revendications 1 à 6, dans lequel le premier composant de réseau de communication est configuré pour fournir la fonctionnalité de réseau de communication aux abonnés du ou des réseaux de communication non publics ou du ou des groupes d'abonnés de réseaux de communication non publics.

8. Agencement de réseau de communication mobile selon la revendication 1, dans lequel le composant de réseau dans un réseau central mobile (118) est une fonction de gestion d'accès et de mobilité (AMF), une fonction de gestion de session (SMF) ou une fonction de réseau de plan utilisateur (UPF).

9. Agencement de réseau de communication mobile selon l'une quelconque des revendications 1 à 8, dans lequel le composant de réseau d'accès radio (103) est une station de base.

10. Agencement de réseau de communication mobile selon la revendication 1, dans lequel lorsque le premier composant de réseau de communication (101, 103, 110, 111, 112, 113) est un composant de réseau d'accès radio (103), le composant de réseau d'accès radio (103) est configuré pour distribuer des ressources radio parmi une pluralité de réseaux de communication non publics (301, 302) et/ou une pluralité de groupes d'abonnés de réseaux de communication non publics conformément à une politique de gestion de ressources radio.

11. Agencement de réseau de communication mobile selon la revendication 10, dans lequel la politique de gestion de ressources radio est disponible en tant que configuration locale au niveau du composant de réseau d'accès radio (103) ou le second composant de réseau de communication (116) est configuré pour configurer la politique de gestion de ressources radio du composant de réseau d'accès radio (103).

12. Procédé d'exploitation d'un agencement de réseau de communication mobile (100) pour supporter un réseau non public comprenant :
la fourniture d'une fonctionnalité de réseau de communication par un composant de réseau de communication (101, 103, 110, 111, 112, 113) ; et l'administration et la gestion d'un attribut du composant de réseau de communication (101, 103, 110, 111, 112, 113), dans lequel l'attribut spécifie un ou plusieurs réseaux de communication non publics (301, 302) ou un ou plusieurs groupes d'abonnés de réseaux de communication non publics pour lesquels le composant de réseau de communication (101, 103, 110, 111, 112, 113) doit fournir la fonctionnalité de réseau de communication ;
dans lequel l'administration et la gestion sont effectuées par un composant d'opération, administration et maintenance, OAM, (116) ;
dans lequel le composant de réseau de communication (101, 103, 110, 111, 112, 113) est un composant de réseau dans un réseau central mobile (118) ou un composant de réseau d'accès radio (103) ;
dans lequel l'administration et la gestion de l'attribut du composant de réseau de communication (101, 103, 110, 111, 112, 113) comprend la création, la suppression et la modification de l'attribut ; et dans lequel l'attribut fait partie d'un profil de fonction de réseau et/ou d'un modèle de ressource de réseau du composant de réseau de communication (101, 103, 110, 111, 112, 113).
